# EUROPEAN PATENT APPLICATION

(11) **EP 1 312 754 A2**
(43) Date of publication of application: **21.05.2003**
(21) Application number: 02025741.6
(22) Date of filing: 15.11.2002
(51) Int. Cl.: F01D 5/14

(54) **Bladed member, in particular for an axial turbine of an aircraft engine**

(30) Priority: 16.11.2001 IT TO20011075
(71) Applicant: FIATAVIO S.p.A., 10127 Torino (IT)
(72) Inventor: Salvano, Sergio, 10137 Torino (IT); Protto, Stefano, 10137 Torino (IT)
(74) Representative: Plebani, Rinaldo

(57) **Abstract**

A bladed member, particularly for an axial turbine of an aircraft engine; the bladed member having at least one aerodynamic profile (6) defined by a back face (13) and an underside face (14) connected to each other along a leading edge (10) and a trailing edge (11) and defining respective nozzles (9) for a stream of gas; the underside face (14) having a projecting rib (17) elongated in a direction (A) crosswise to the leading and trailing edges (10)(11).

## Description

The present invention relates to a bladed member, in particular for an axial turbine of an aircraft engine, to which the following description refers purely by way of example.

As is known, in an axial gas turbine, each blade extends substantially in a radial direction with respect to the turbine axis, and has an aerodynamic profile defined by a suction face and a pressure face connected to each other along a leading edge and a trailing edge. The shape of the aerodynamic profile, and therefore of the back and underside faces, is determined at the design stage, and varies continuously in said radial direction.

Some turbine blades, particularly those of so-called low-pressure turbines, are normally of considerable radial height, and comprise relatively thin intermediate portions. As a result, known blades are subject to undesired vibration caused by severe in-service dynamic stress, and particularly to so-called 2-stripe mode vibration, during which the leading and trailing edges of the aerodynamic profile tend to move to and from each other.

A need is felt to limit such vibration, while altering as little as possible the flow conditions of the gas flowing between the aerodynamic profiles.

It is an object of the present invention to provide a bladed member, particularly for an axial turbine of an aircraft engine, designed to provide a straightforward, low-cost solution to the aforementioned problem.

According to the present invention, there is provided a bladed member, particularly for an axial turbine of an aircraft engine; the bladed member comprising at least one aerodynamic profile defined by a leading edge, a trailing edge, a back face, and an underside face; said underside and back faces being connected along said leading and trailing edges, and defining respective nozzles for a stream of fluid; characterized by also comprising at least one rib projecting from one of said underside and back faces, and elongated in a direction crosswise to said leading and trailing edges.

A non-limiting embodiment of the invention will be described by way of example with reference to the accompanying drawings, in which:
Figure 1 shows a view in perspective of a preferred embodiment of the bladed member, particularly for an axial turbine of an aircraft engine, according to the present invention;
Figure 2 shows a larger-scale side view of a detail of the Figure 1 bladed member;
Figure 3 shows a section along line III-III in Figure 2;
Figure 4 shows a larger-scale section along line IV-IV in Figure 3.

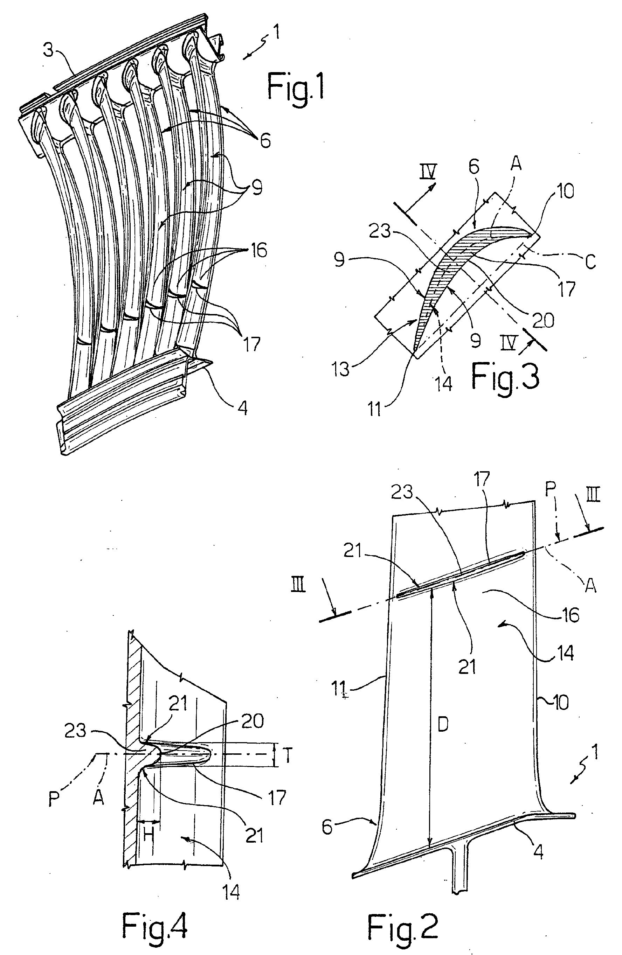

Number 1 in Figure 1 indicates a bladed member defined by a sector of a blade array forming part, in particular, of a stator for an axial gas turbine (not shown) of an aircraft engine.

Sector or member 1 has an axis (not shown) coincident with the turbine axis, and comprises an outer platform 3 and an inner platform 4 extending in respective circumferential directions with respect to said axis; and a number of aerodynamic profiles 6 interposed between and integral with platforms 3, 4, and extending substantially in respective radial directions with respect to said axis.

With reference to the accompanying drawings, each profile 6 separates circumferentially two nozzles 9 for the passage of a stream of gas in expansion inside the turbine, and is defined by a leading edge 10, a trailing edge 11, an outwardly-convex back or suction face 13, and an outwardly-concave underside or pressure face 14. Faces 13, 14 are connected along edges 10, 11, which are separated by a distance or so-called straight chord indicated C in Figure 3.

Each profile 6 comprises an intermediate radial portion 16, which has a relatively thin cross section and supports a strengthening rib 17. Rib 17 projects from face 14 and is elongated in a curved direction A, which is crosswise to edges 10, 11, is parallel to the flow direction of the stream of fluid in relative nozzle 9, and lies on face 14 and in a plane P defining the mid-plane of rib 17.

Rib 17 is housed in a space defined by face 14 and by an ideal surface joining edges 10, 11 and indicated by chord C in Figure 3, and is separated from platform 4 by a distance D (Figure 2). Distance D, i.e. the radial position of rib 17, depends on where maximum 2-stripe mode vibration is encountered, and normally ranges between one and two times chord C of portion 16. Rib 17 slopes with respect to the turbine axis so as to be substantially parallel to the flow direction of the stream of fluid in relative nozzle 9.

Rib 17 has a rounded tip 20; and two flat lateral surfaces 21, which are symmetrical with respect to plane P, are connected to each other by tip 20 and to face 14 by curve radii varying in direction A, converge towards tip 20, and slope at an angle of 10° to 15° with respect to plane P.

With reference to Figures 3 and 4, tip 20 is intersected by plane P along an edge line, which is outwardly concave (Figure 3) and at a height H from face 14, measured in plane P (Figure 4), varying in direction A. More specifically, height H of rib 17 increases gradually from the two opposite ends towards an intermediate portion 23 located roughly halfway along chord C, while the thickness T of rib 17, measured between surfaces 21 and perpendicular to plane P, is substantially constant in direction A.

In actual use, rib 17 obviously provides for limiting 2-stripe mode vibration, during which edges 10, 11 of profile 6 tend to move to and from each other, and the sections of profile 6, such as the section in Figure 3, are deformed to the point of becoming ideally flat.

This is substantially due to rib 17 extending in a direction A crosswise to edges 10, 11, and so stiffening portion 16 and increasing vibration frequency, particularly as regards stress in direction A.

Albeit to a lesser extent, rib 17 also provides for withstanding torsional vibration modes, wherein the sections of profile 6 tend to rotate about an axis perpendicular to the plane in which the sections are formed.

Moreover, rib 17 is so shaped as to have relatively little effect on gas flow in relative nozzle 9. More specifically, the fact that rib 17 is formed on face 14 as opposed to face 13, that direction A substantially coincides with the flow direction in nozzle 9, and providing a rounded tip 20 and fillets between surfaces 21 and face 14, reduce the risk of vortex zones forming in use.

Clearly, changes may be made to bladed member 1 as described and illustrated herein without, however, departing from the scope of the present invention.

In particular, member 1 may be defined by a blade comprising only one aerodynamic profile, and/or may form part of a compressor as opposed to a turbine.

Rib 17 may be provided on rotor as opposed to stator blades; in which case, the aerodynamic profile portions most subject to 2-stripe vibration mode are normally adjacent to the outer as opposed to the inner platform, so that distance D is measured from the outer platform.

Each profile 6 may be provided with more than one rib; the geometry of the rib itself may differ from that described and illustrated by way of example; and/or the rib may be located otherwise than as shown with respect to platforms 3, 4, depending on the shape of the relative aerodynamic profile.

## Claims

1. A bladed member (1), particularly for an axial turbine of an aircraft engine; the bladed member comprising at least one aerodynamic profile (6) defined by a leading edge (10), a trailing edge (11), a back face (13), and an underside face (14); said underside and back faces (14)(13) being connected along said leading and trailing edges (10)(11), and defining respective nozzles (9) for a stream of fluid; **characterized by** also comprising at least one rib (17) projecting from one (14) of said underside and back faces, and elongated in a direction (A) crosswise to said leading and trailing edges (10)(11).

2. A bladed member as claimed in Claim 1, **characterized in that** said rib (17) projects from said underside face (14).

3. A bladed member as claimed in Claim 2, **characterized in that** said direction (A) is parallel to the flow direction of said stream of fluid in the relative said nozzle (9).

4. A bladed member as claimed in Claim 2 or 3, **characterized in that** said rib (17) is housed in a space defined by said underside face (14) and by an ideal surface joining said leading and trailing edges (10) (11).

5. A bladed member as claimed in any one of Claims 2 to 4, **characterized in that** said direction (A) lies in a plane defining a mid-plane (P) of said rib (17); said rib (17) having two lateral surfaces (21) extending on opposite sides of said mid-plane (P), and a rounded tip (20) connecting said lateral surfaces (21).

6. A bladed member as claimed in Claim 5, **characterized in that** said lateral surfaces (21) are flat and symmetrical with respect to said mid-plane (P).

7. A bladed member as claimed in Claim 6, **characterized in that** said lateral surfaces (21) converge towards said tip (20), and each form, with said mid-plane (P), an angle of 10° to 15°.

8. A bladed member as claimed in Claim 6 or 7, **characterized in that** the thickness (T) of said rib, measured between said lateral surfaces (21) and perpendicular to said mid-plane (P), is constant in said direction (A).

9. A bladed member as claimed in any one of Claims 5 to 8, **characterized in that** said mid-plane (P) intersects said tip (20) along a concave edge line.

10. A bladed member as claimed in Claim 9, **characterized in that** the height (H) of said rib (17), measured in said mid-plane (P) with respect to said underside face (14), increases gradually in said direction (A) from the ends of said rib (17) to an intermediate portion (23).

11. A bladed member as claimed in any one of the foregoing Claims, **characterized by** also comprising two platforms (3) (4) for supporting said aerodynamic profile (6) and located at opposite ends of said aerodynamic profile (6); the distance (D) between said rib (17) and one (4) of said platforms ranging between one and two times the chord (C) of said aerodynamic profile (6).

12. A bladed member as claimed in any one of the foregoing Claims, **characterized by** comprising a number of said aerodynamic profiles (6), and a relative said rib (17) for each said aerodynamic profile (6).
